# EUROPÄISCHE PATENTANMELDUNG

(11) **EP 1 454 815 A2**
(43) Veröffentlichungstag der Anmeldung: **08.09.2004**
(21) Anmeldenummer: 04004933.0
(22) Anmeldetag: 03.03.2004
(51) Int. Cl.: B62D 21/02

(54) **Tragstruktur eines Kraftfahrzeugs**

(30) Priorität: 04.03.2003 DE 10309624
(71) Anmelder: AUDI AG, 85045 Ingolstadt (DE)
(72) Erfinder: Schretzlmeier, Werner, 74235 Erlenbach (DE); Kappler, Armin, 74226 Nordheim (DE); Kruse, Martin, 68789 St.Leon-Rot (DE); Grosser, Ralf, 74235 Erlenbach (DE)
(74) Vertreter: Patzelt, Heike

(57) **Zusammenfassung**

Der Erfindung betrifft eine Tragstruktur (1) eines Kraftfahrzeugs, bei dem die Oberseite des Tunnels von einem hochliegenden Längsträger (10) gebildet wird, der zusammen mit den Längsträgern der Bodentragstruktur (11,12) zwei Ebenen bildet, auf welche Kräfte von der Fronttragstruktur (1) besonders gleichmäßig auf die Bodentragstruktur und Hecktragstruktur übertragen werden.

## Beschreibung

Die Erfindung betrifft eine Tragstruktur eines Kraftfahrzeugs mit einer Frontlängsträger aufweisenden Fronttragstruktur gemäß dem Oberbegriff es Patentanspruchs 1.

Einem Kraftfahrzeuge mit Mittelmotor oder Heckmotor steht bei einem Frontalzusammenstoß die Brennkraftmaschine als Blockbildungselement zur Energieabsorption nicht zur Verfügung.

Daraus entsteht die Notwendigkeit die Frontlängsträger aufweisende Fronttragstruktur der Tragstruktur des Kraftfahrzeuges so auszugestalten, dass die Frontlängsträger besonders viel Aufprallenergie absorbieren können. Eine derartige Tragstruktur für ein mit einem Heckmotor versehenes Kraftfahrzeug ist beispielsweise aus der DE 102 33 915 A1 bekannt.

Neben der Energieabsorption hat die Fronttragestruktur noch die Aufgabe einwirkenden Kräfte gleichmäßig in die Bodentragstruktur und in die Hecktragstruktur einzuleiten, um partielle Lastspitzen der Bodentragstruktur und der Hecktragstruktur zu vermeiden. Dabei sollte die Fronttragestruktur so aufgebaut sein, dass einen Gepäckraum mit einem möglichst großem Volumen in die Fronttragstruktur integriert werden kann.

Der Erfindung liegt die Aufgabe zugrunde, die Tragstruktur eines Kraftfahrzeugs mit einer Frontlängsträger aufweisenden Fronttragstruktur gemäß dem Oberbegriff es Patentanspruchs 1 anzugeben, die eine hohe Energieabsorption aufweist, die auftretende Kräfte gleichmäßig auf die Bodentragstruktur und die Hecktragstruktur überträgt, die das Ausbilden eines volumenreichen Gepäckraumes ermöglicht, und die zudem kostengünstig herzustellen ist.

Diese Aufgabe wird erfindungsgemäß durch die Merkmale im Kennzeichen des Patentanspruchs 1 gelöst, wonach die Oberseite des Tunnels als hochliegender Längsträger ausgebildet ist. Die mindestens zwei Längsträger der Bodentragstruktur sind als zwei Schweller und zwei den Tunnel begrenzende tiefliegende Längsträger ausgebildet. Die Frontlängsträger der Fronttragstruktur sind mit dem hochliegenden Längsträger, mit den tiefliegenden Längsträgern sowie den Schwellern der Bodentragstruktur verbunden.

Durch diesen Aufbau werden Kräfte, die beim Betrieb des Kraftfahrzeugs oder bei einem Zusammenstoß auf die Tragstruktur des Kraftfahrzeugs einwirken, auf zwei Ebenen verteilt, die von dem hochliegenden Längsträger und von den tiefliegenden Längsträgern gebildet werden.

Die Frontlängsträger sind zur Absorption von Aufprallenergien ausgebildet, die bei Frontalzusammenstößen auf die Fronttragstruktur einwirken. Beispielsweise werden die Frontlängsträger von speziell ausgestaltete Faltelementen gebildet, die sich bei Krafteinwirkung Faltenbeulen bildend verformen.

Als vorderster Teil der Fronttragstruktur ist ein Querträger Stoßfänger vorgesehen, wobei zwischen dem Querträger Stoßfänger und den Frontlängsträgern der Fronttragstruktur Deformationskörper angeordnet sind.

An der Forderseite der Fahrgastzelle des Kraftfahrzeugs sind ein Querträger Stirnwand, ein Querträger Pedalarie und ein Querträger Frontscheibe ausgebildet, die an beiden Seiten des Kraftfahrzeugs durch einen Fußraumträger miteinander verbunden sind.

Zur gleichmäßigen Absorption von Aufprallenergien bei Frontalstößen und zur gleichmäßigen Verteilung von Kräften auf die Bodentragstruktur und auf die Hintertragstruktur sind sechs Frontlängsträger in der Fronttragstruktur ausgebildet.

Dabei sind zwei untere Frontlängsträger über den Querträger Stirnwand mit den tiefliegenden Längsträgern und den Schwellern der Bodentragstruktur verbunden. Entsprechend sind die zwei oberen Frontlängsträger über den Querträger Pedalarie mit dem hochliegenden Längsträger des Tunnels verbunden. Die zwei äußere Frontlängsträger sind mit dem Querträger Frontscheibe verbunden.

In einer vorteilhaften Weiterbildung der Erfindung ist vorgesehen, dass die oberen Frontlängsträger ypsilonförmig ausgebildet sind, wobei die zwei Enden des ypsilonförmigen oberen Frontlängsträgers mit dem Querträger Pedalarie verbunden sind.

Der mit dem Querträger Stirnwand verbundene, der Fahrzeugaußenseite zugewandte Teil beider ypsilonförmigen oberen Frontlängsträger bildet den Längsträger Radhaus. Der Längsträger Radhaus ist als Gussteil ausgebildet und dient der Befestigung eines Querlenkers der Radaufhängung des Kraftfahrzeugs.

In einer weiteren vorteilhaften Weiterbildung der Erfindung ist vorgesehen, dass die unteren Frontlängsträger, die oberen Frontlängsträger und die äußeren Frontlängsträger zur Stabilisierung durch Querträger und durch Vertikalträger miteinander verbunden sind.

Dabei ist vorgesehen, dass die gesamte Tragstruktur des Kraftfahrzeugs aus Leichtmetall hergestellt ist.

In einer nächsten vorteilhaften Weiterbildung der Erfindung ist vorgesehen, dass die Brennkraftmaschine des Kraftfahrzeugs in der Mitte oder im Heck angeordnet ist.

In einer letzten vorteilhaften Weiterbildung der Erfindung ist vorgesehen, dass der hochliegende Längsträger und die tiefliegenden Längsträger aus einem den gleichen Profilquerschnitt aufweisenden Stangenpressprofilen hergestellt sind.

Eine derartig ausgebildete Tragstruktur eines Kraftfahrzeugs weist eine hohe Energieabsorption auf. Dabei werden auftretende Kräfte durch die zwei gebildeten Ebenen gleichmäßig auf die Bodentragstruktur und die Hecktragstruktur übertragen. Zudem kann zwischen den zwei unteren Frontlängsträgern, den zwei oberen Frontlängsträgern und den zwei äußeren Frontlängsträgern ein volumenreicher Gepäckraum in die Fronttragstruktur integriert werden. Dabei ist die Erfindungsgemäße Tragstruktur kostengünstig herzustellen.

Im folgenden soll die Tragstruktur eines Kraftfahrzeugs anhand von einem Ausführungsbeispiel im Zusammenhang mit zwei Figuren dargestellt und erläutert werden.

Es zeigen:
- Figur 1: eine Frontansicht der sechs Frontlängsträger der Fronttragstruktur eines einen Heckmotor auf weisenden Kraftfahrzeugs,
- Figur 2: eine Seitenansicht der Fronttragstruktur des einen Heckmotor auf weisenden Kraftfahrzeugs.

Die Tragstruktur der Karosserie eines Kraftfahrzeuges kann in die Fronttragstruktur, die Bodentragstruktur und die Hecktragstruktur unterteilt werden. Der Fahrzeugbau ermöglicht die Fertigung der gesamte Karosserie aus Aluminium, wobei Bleche, Stangenpressprofile und Gussteile verwendet werden.

Bei einem als Sportwagen ausgelegten Kraftfahrzeug mit einer im Heck angeordneten Brennkraftmaschine und einem Fahrwerk mit Allradantrieb ist im Bereich der Fahrgastzelle in der Bodentragstruktur ein die Antriebswelle umfassender Tunnel ausgebildet. Die Oberseite des Tunnels wird durch einen hochliegenden Längsträger gebildet, der aus einem Stangepressprofil gefertigt ist, und der fast mittig durch die Fahrgastzelle des Kraftfahrzeugs verläuft. Dieser Längsträger bildet zusätzlich zur Ebene der Bodentragstruktur eine zweite Ebene, über welche Kräfte von der Fronttragstruktur auf die Bodentragstruktur und die Hecktragstruktur übertragen werden können. Die Bodentragstruktur besteht im wesentlichen aus den die untere Fahrzeugaußenseite bildenden Schwellern und aus den den Tunnel begrenzenden tiefliegenden Längsträgern, die ebenfalls aus einem Stangenpressprofil gefertigt sind.

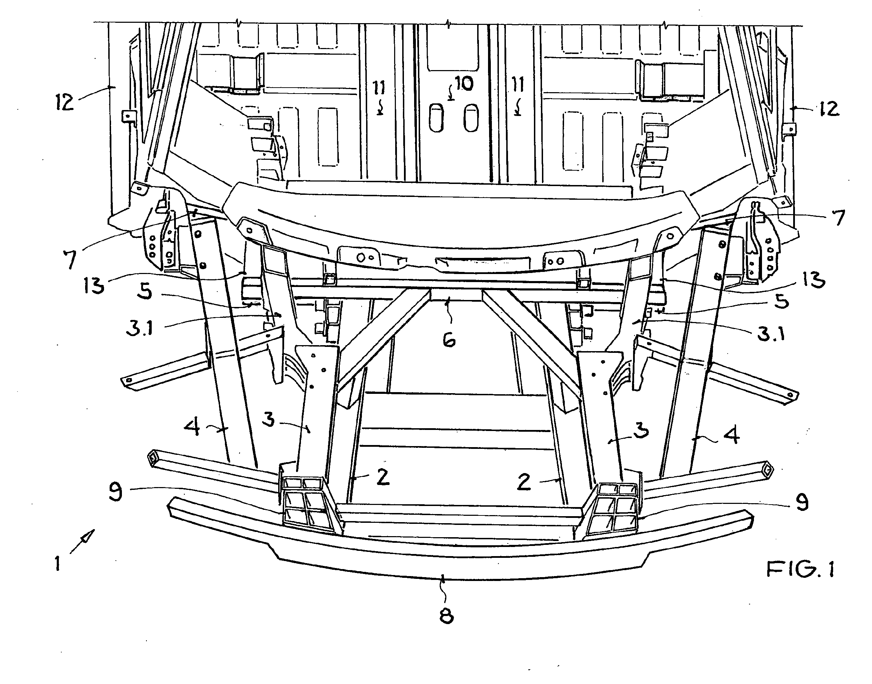

In der Figur 1 ist in einer Frontansicht die Fronttragstruktur des Sportwagens dargestellt, die von sechs durch Querträger und Vertikalträger miteinander verstrebten Frontlängsträger gebildet wird. Die sechs Frontlängsträger sind so angeordnet, dass zwischen ihnen ein Gepäckraum ausgebildet werden kann. Die sechs Frontlängsträger sind zur Absorption von Aufprallenergien ausgebildet, die beispielsweise bei einem Frontalzusammenstoß auf die Fronttragstruktur 1 einwirken, wobei die Frontlängsträger Faltenbeulen bildend verformen.

Die vorderste Verstrebung der Fronttragstruktur wird von einem Querträger Stoßfänger 8 gebildet. An dem Querträger Stoßfänger 8 sind zwei Deformationskörper 9 angebracht, die sich im Fall eines Frontalzusammenstoßes verformen und Aufprallenergie absorbieren, bevor die Frontlängsträger der Fronttragstruktur 1 einen Schaden erleiden. An den Deformationskörpern 9 sind als Frontlängsträger zwei untere Frontlängsträger 2 und zwei obere Frontlängsträger 3 befestigt, an denen über weitere Querträger zur Montage von Motor und Karosserieteilen zwei äußere Frontlängsträger 4 befestigt sind.

Die Fahrgastzelle wird an ihrer Vorderseite von drei Querträgern begrenzt. Der untere der drei Querträger ist der Querträger Stirnwand 5, der aufgrund des Tunnels aus zwei Teilen besteht, wobei die inneren Enden der zwei Teile des Querträger Stirnwand 5 mit den Enden der tiefliegenden Längsträger 11 der Bodentragstruktur verbunden sind. Der Mittlere der drei Querträger ist der Querträger Pedalarie 6, der mit dem das Oberteil des Tunnels bildende hochliegende Längsträger 10 verbunden ist. Der obere der drei Querträger ist der Querträger Frontscheibe 7. Der Querträger Stirnwand 5, der Querträger Pedalarie 6 und der Querträger Frontscheibe 7 sind an beiden Seiten durch jeweils einen Fußraumträger 13 miteinander verbunden. An die Fußraumträger 13 schließen sich über vordere Längsträger der Bodentragsturktur die Schweller 12 der Bodentragstruktur an.

Die zwei unteren Frontlängsträger 2 sind mit dem Querträger Stirnwand 5 verbunden.

Die oberen Frontlängsträger 3 sind ypsilonförmig ausgebildet, wobei die zwei Enden des ypsilonförmigen oberen Frontlängsträgers 3 mit dem Querträger Pedalarie 6 verbunden sind. Der äußere Schenkel des mit dem Querträger Stirnwand 6 verbundenen ypsilonförmigen oberen Frontlängsträger 3 ist als Gussteil ausgebildet und bildet den Längsträger Radhaus 3.1. Der Längsträger Radhaus 3.1 dient der Aufnahme eines Querlenkers der Radaufhängung des Kraftfahrzeugs.

Die zwei äußeren Frontlängsträger 4 sind mit dem Querträger Frontscheibe 7 verbunden.

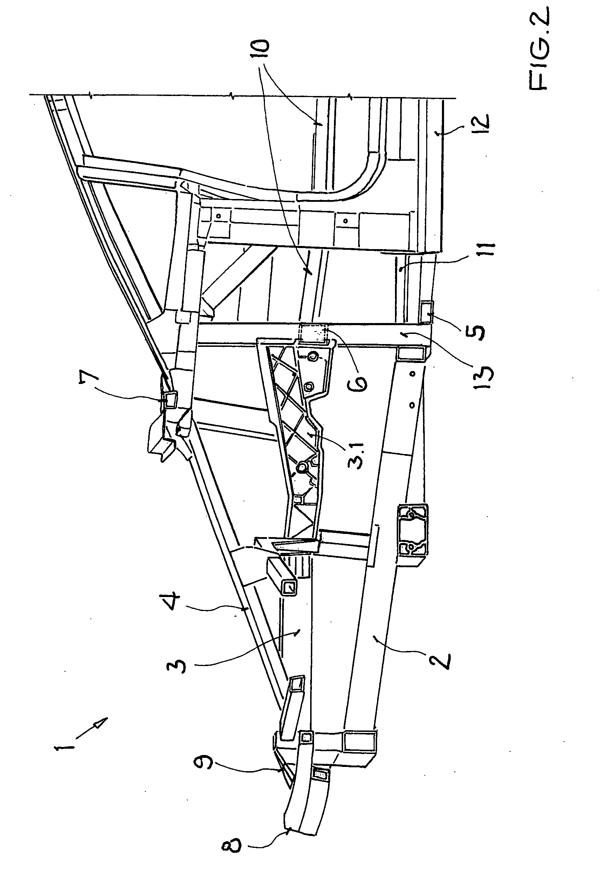

Figur 2 zeigt die Seitenansicht der Fronttragstruktur des einen Heckmotor aufweisenden Sportwagens. Dabei ist zu sehen, dass bei über die Fronttragstruktur auf die Bodentragstruktur eingeleitete Kräfte nahezu gradlinig von den unteren Frontlängsträgern 2 über den Querträger Stirnwand auf die tiefliegenden Längsträger und die Schweller der Bodentragstruktur übertragen werden. Von den oberen Frontlängsträgern 3 werden Kräfte ebenso über den Querträger Pedalarie auf den hochliegenden Längsträger übertragen. Dadurch werden zwei Ebenen gebildet, die dem Fahrwerk des Sportwagens eine außerordentliche Steifigkeit verleihen.

Die so ausgebildete Tragstruktur des Sportwagens weist im Fall eines Frontalzusammenstoßes eine hohe Energieabsorption auf. Im normalen Fahrbetrieb werden über die Fronttragstruktur eingeleitete Kräfte durch die zwei gebildeten Ebenen gleichmäßig auf die Bodentragstruktur und die Hecktragstruktur übertragen. Zudem kann zwischen den zwei untere Frontlängsträgern, den zwei oberen Frontlängsträgern und den zwei äußeren Frontlängsträgern ein volumenreicher Gepäckraum in die Fronttragstruktur integriert werden.

## Patentansprüche

1. Tragstruktur eines Kraftfahrzeugs mit einer Frontlängsträger aufweisenden Fronttragstruktur (1) und mit einer einen Tunnel sowie mindestens zwei Längsträger aufweisenden Bodentragstruktur, **dadurch gekennzeichnet, dass** die Oberseite des Tunnels als hochliegender Längsträger (10) ausgebildet ist, dass die mindestens zwei Längsträger der Bodentragstruktur als zwei Schweller (12) und zwei den Tunnel begrenzende tiefliegende Längsträger (11) ausgebildet sind, und dass die Frontlängsträger der Fronttragstruktur (1) mit dem hochliegenden Längsträger (10), mit den tiefliegenden Längsträgern (11) sowie den Schwellern (12) der Bodentragstruktur verbunden sind.

2. Tragstruktur nach Anspruch 1, **dadurch gekennzeichnet, dass** die Frontlängsträger der Fronttragstruktur (1) zur Absorption von Aufprallenergien ausgebildet sind.

3. Tragstruktur nach Anspruch 1 oder 2, **dadurch gekennzeichnet, dass** als vorderste Teil der Fronttragstruktur (1) ein Querträger Stoßfänger (8) vorgesehen ist, und dass zwischen dem Querträger Stoßfänger (8) und den Frontlängsträgern der Fronttragstruktur (1) Deformationskörper (9) angeordnet sind.

4. Tragstruktur nach einem der Ansprüche 1 bis 3, **dadurch gekennzeichnet, dass** an der Vorderseite der Fahrgastzelle des Kraftfahrzeugs ein Querträger Stirnwand (5), ein Querträger Pedalarie (6) und ein Querträger Frontscheibe (7) ausgebildet ist, und dass der Querträger Stirnwand (5), der Querträger Pedalarie (6) und der Querträger Frontscheibe (7) an beiden Seiten des Kraftfahrzeugs durch einen Fußraumträger (13) miteinander verbunden sind.

5. Tragstruktur nach einem der Ansprüche 1 bis 4, **dadurch gekennzeichnet, dass** zur gleichmäßigen Absorption von Aufprallenergien bei Frontalstößen und zur gleichmäßigen Verteilung von Kräften auf die Bodentragstruktur und die Hecktragstruktur sechs Frontlängsträger in der Fronttragstruktur (1) ausgebildet sind.

6. Tragstruktur nach Anspruch 5, **dadurch gekennzeichnet, dass** zwei untere Frontlängsträger (2) über den Querträger Stirnwand (5) mit den tiefliegenden Längsträgern (11) und den Schwellern (12) der Bodentragstruktur verbunden sind, dass zwei obere Frontlängsträger (3) über den Querträger Pedalarie (6) mit dem hochliegenden Längsträger (10) des Tunnels verbunden ist und dass zwei äußere Frontlängsträger (4) mit dem Querträger Frontscheibe (7) verbunden ist.

7. Tragstruktur nach Anspruch 6, **dadurch gekennzeichnet, dass** die oberen Frontlängsträger (3) ypsilonförmig ausgebildet sind, und dass die zwei Enden des ypsilonförmigen oberen Frontlängsträgers (3) mit dem Querträger Pedalarie (6) verbunden sind.

8. Tragstruktur nach Anspruch 7, **dadurch gekennzeichnet, dass** der mit dem Querträger Stirnwand (5) verbundene, der Fahrzeugaußenseite zugewandte Teil beider ypsilonförmigen oberen Frontlängsträger (3) den Längsträger Radhaus (3.1) bildet, dass der Längsträger Radhaus (3.1) als Gussteil ausgebildet ist, und dass der Längsträger Radhaus (3.1) zur Befestigung eines Querlenkers der Radaufhängung des Kraftfahrzeugs ausgebildet ist.

9. Tragstruktur nach einem der Ansprüche 6 bis 8, **dadurch gekennzeichnet, dass** die unteren Frontlängsträger (2), die oberen Frontlängsträger (3) und die äußeren Frontlängsträger (4) zur Stabilisierung durch weitere Querträger und durch Vertikalträger miteinander verbunden sind.

10. Tragstruktur nach einem der vorangegangenen Ansprüche, **dadurch gekennzeichnet, dass** die Tragstruktur des Kraftfahrzeugs aus Leichtmetall hergestellt ist.

11. Tragstruktur nach einem der vorangegangenen Ansprüche, **dadurch gekennzeichnet, dass** die Brennkraftmaschine in der Mitte oder im Heck des Kraftfahrzeugs angeordnet ist.

12. Tragstruktur nach einem der vorangegangenen Ansprüche, **dadurch gekennzeichnet, dass** der hochliegende Längsträger (10) und die tiefliegenden Längsträger (11) aus einem den gleichen Profilquerschnitt aufweisenden Stangenpressprofil hergestellt sind.
